# EUROPEAN PATENT SPECIFICATION

(11) **EP 4 346 334 B1**
(45) Date of publication and mention of the grant of the patent: **19.02.2025**
(21) Application number: 23199709.9
(22) Date of filing: 26.09.2023
(51) Int. Cl.: H05B 6/12, F04D 27/00

(54) **FAN CONTROL METHOD AND INDUCTION COOKER**
LÜFTERSTEUERUNGSVERFAHREN UND INDUKTIONSKOCHER
PROCÉDÉ DE COMMANDE DE VENTILATEUR ET CUISEUR À INDUCTION

(30) Priority: 29.09.2022 CN 202211201450
(43) Date of publication of application: 03.04.2024
(73) Proprietor: Guangdong Arcair Appliance Co., Ltd., Guangdong 528318 (CN)
(72) Inventor: KANG, ZUOTIAN, Foshan, Guangdong 528318 (CN); CHEN, JINHUA, Foshan, Guangdong 528318 (CN)
(74) Representative: Ipey

(56) References cited:
- JP-A- 2004 111 090
- KR-B1- 101 819 370
- US-A1- 2020 323 048

## Description

### TECHNICAL FIELD

The embodiments of the present disclosure relate to but not limited to the field of kitchen appliances and in particular to a fan control method and an induction cooker.

### BACKGROUND

When an induction cooker works, heat will be generated, which increases the temperature of the induction cooker. Therefore, a fan is required to blow air to cool it down and otherwise, high temperature may damage to the elements inside the induction cooker. But, the existing induction cooker fans mainly dissipate heat with a constant rotation speed. During the rotation of the fan, it generates noise, and the faster the fan rotates, the louder the noise it produces. Prolonged high-speed operation also accelerates the aging of the fan bearings.

JP 2004 111090 A discloses a fan control method according to the preamble of claim 1.

### SUMMARY

Below is a summary for the subject detailed in the present disclosure. The summary is not intended to limit the scope of protection of the claims of the present disclosure.

An embodiment of the present disclosure provides a fan control method and an induction cooker.

According to an embodiment of a first aspect of the present disclosure, there is provided a fan control method, which is applied to an induction cooker with multiple heating zones. The fan control method includes:
obtaining a working mode of the induction cooker;
obtaining an Insulated Gate Bipolar Transistor (IGBT) temperature and a cooktop temperature of the induction cooker;
based on the working mode, the IGBT temperature and the cooktop temperature, controlling a rotation speed of the fan.

In some embodiments of the first aspect of the present disclosure, based on the working mode, the IGBT temperature and the cooktop temperature, controlling the rotation speed of the fan includes:
when the induction cooker is in a working mode with a single heating zone working and the IGBT temperature and the cooktop temperature satisfy a first preset condition, controlling the rotation speed of the fan as a first speed;
when the induction cooker is in the working mode with a single heating zone working and the IGBT temperature and the cooktop temperature satisfy a second preset condition, controlling the rotation speed of the fan as a second speed, where the second speed is less than the first speed;
where the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

In some embodiments of the first aspect of the present disclosure, based on the working mode, the IGBT temperature and the cooktop temperature, controlling the rotation speed of the fan includes:
when the induction cooker is in the working mode with a single heating zone working and the IGBT temperature and the cooktop temperature do not satisfy the first preset condition and the second preset condition, controlling the rotation speed of the fan to be unchanged.

In some embodiments of the first aspect of the present disclosure, based on the working mode, the IGBT temperature and the cooktop temperature, controlling the rotation speed of the fan includes:
when the induction cooker is in a working mode with multiple heating zones working, and the IGBT temperature and the cooktop temperature satisfy a third preset condition, controlling the rotation speed of the fan as a third speed;
when the induction cooker is in the working mode with multiple heating zones working, and the IGBT temperature and the cooktop temperature satisfy a fourth preset condition, controlling the rotation speed of the fan as a fourth speed, where the fourth speed is less than the third speed;
where the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

In some embodiments of the first aspect of the present disclosure, based on the working mode, the IGBT temperature and the cooktop temperature, controlling the rotation speed of the fan includes:
when the induction cooker is in the working mode with multiple heating zones working, and the IGBT temperatures and the cooktop temperatures do not satisfy the third preset condition and the fourth preset condition, controlling the rotation speed of the fan to be unchanged.

According to an embodiment of a second aspect of the present disclosure, there is provided an induction cooker, including multiple heating zones, a fan and a controller, where the heating zones are provided with an IGBT drive circuit; the controller is connected to the IGBT drive circuit and the fan;
the controller includes a working mode obtaining module, a first temperature detecting module, a second temperature detecting module, and a fan speed controlling module;
the working mode obtaining module is configured to obtain a working mode of the induction cooker;
the first temperature detecting module is configured to obtain an IGBT temperature of the induction cooker;
the second temperature detecting module is configured to obtain a cooktop temperature of the induction cooker;
the fan speed controlling module is configured to control a rotation speed of the fan based on the working mode, the IGBT temperature and the cooktop temperature.

In some embodiments of the second aspect of the present disclosure, the fan speed controlling module is further configured to:
when the induction cooker is in a working mode with a single heating zone working, and the IGBT temperature and the cooktop temperature satisfy a first preset condition, control the rotation speed of the fan as a first speed;
when the induction cooker is in the working mode with a single heating zone working and the IGBT temperature and the cooktop temperature satisfy a second preset condition, control the rotation speed of the fan as a second speed, wherein the second speed is less than the first speed;
wherein the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

In some embodiments of the second aspect of the present disclosure, the fan speed controlling module is further configured to: when the induction cooker is in the working mode with a single heating zone working and the IGBT temperature and the cooktop temperature do not satisfy the first preset condition and the second preset condition, control the rotation speed of the fan to be unchanged.

In some embodiments of the second aspect of the present disclosure, the fan speed controlling module is further configured to:
when the induction cooker is in a working mode with multiple heating zones working, and the IGBT temperature and the cooktop temperature satisfy a third preset condition, control the rotation speed of the fan as a third speed;
when the induction cooker is in the working mode with multiple heating zones working, and the IGBT temperature and the cooktop temperature satisfy a fourth preset condition, control the rotation speed of the fan as a fourth speed, where the fourth speed is less than the third speed;
wherein the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

In some embodiments of the second aspect of the present disclosure, the fan speed controlling module is further configured to: when the induction cooker is in the working mode with multiple heating zones working, and the IGBT temperatures and the cooktop temperatures do not satisfy the third preset condition and the fourth preset condition, control the rotation speed of the fan to be unchanged.

The above solutions at least have the following beneficial effects: based on the working mode, the IGBT temperature and the cooktop temperature, the rotation speed of the fan is controlled; when multiple heating zones of the induction cooker work at the same time, since the induction cooker is heated faster to an excessively high temperature, the fan is to be controlled to rotate at a higher speed to achieve fast heat dissipation. When one heating zone of the induction cooker works, since the temperature of the induction cooker is normal, the fan may be controlled to rotate at a low speed such that noise influence can be reduced without affecting the temperature reduction. In this way, the rotation speed of the fan can be controlled with an eye on the influence of the temperature and the noise.

### BRIEF DESCRIPTION OF DRAWINGS

The accompanying drawings are provided to help further understand the technical solutions of the present disclosure and constitute a part of the specification to explain the technical solutions of the present disclosure together with the embodiments of the present disclosure, without limiting the technical solutions of the present disclosure.
FIG. 1 is a step diagram illustrating a fan control method according to one or more embodiments of the present disclosure.
FIG. 2 is a step diagram illustrating step S311.
FIG. 3 is a step diagram illustrating step S312.
FIG. 4 is a step diagram illustrating step S313.
FIG. 5 is a step diagram illustrating step S321.
FIG. 6 is a step diagram illustrating step S322.
FIG. 7 is a step diagram illustrating step S323.
FIG. 8 is a structural diagram illustrating a controller of an induction cooker according to one or more embodiments of the present disclosure.

### DETAILED DESCRIPTION

In order to make the objects, technical solutions and the advantages of the present disclosure clearer and more intelligible, the present disclosure will be further detailed below in combination with drawings and specific embodiments. It should be understood that the specific embodiments described herein are merely used to interpret the present disclosure rather than to limit the present disclosure.

It should be noted that although functional module division is performed in the apparatus diagrams and logic sequence is shown in the flowcharts, the steps shown or described herein can be, in some cases, performed with different module division and different sequence from shown in the apparatus diagrams and flowcharts. The terms such as "first" and "second" shown in the specification, the claims or the drawings are used to distinguish similar objects and not necessarily used to describe a specific sequence or order.

The embodiments of the present disclosure will be further set out below in combination with drawings.

An embodiment of the present disclosure provides an induction cooker.

The induction cooker includes multiple heating zones, a fan and a controller 10. The heating zones are provided with an Insulated Gate Bipolar Transistor (IGBT) drive circuit and a coil plate; the controller 10 is connected to the IGBT drive circuit, the coil plate, and the fan. The IGBT drive circuit is provided with an IGBT.

It can be understood that the induction cooker may be provided with only one fan or with multiple fans each of which corresponds to one heating zone.

The fan is driven by a fan drive circuit. The induction cooker may be provided with multiple fans which are connected in parallel and driven by the fan drive circuit.

The Insulated Gate Bipolar Transistor (IGBT) is a composite full control type voltage-driven power semiconductor device formed of a bipolar junction transistor and an insulated gate field effect transistor, which has the advantages of high input impedance of the Metal-Oxide-Semiconductor Field-Effect Transistor (MOSFET) and low conduction voltage drop of the giant transistor (GTR). For the GTR, the saturated voltage drop is low, the carrier density is large but the drive current is large; for the MOSFET, the drive power is very small, the switching speed is very fast but the conduction voltage drop is large and the carrier density is small. The IGBT has the advantages of both: the drive power is small and the saturated voltage drop is low.

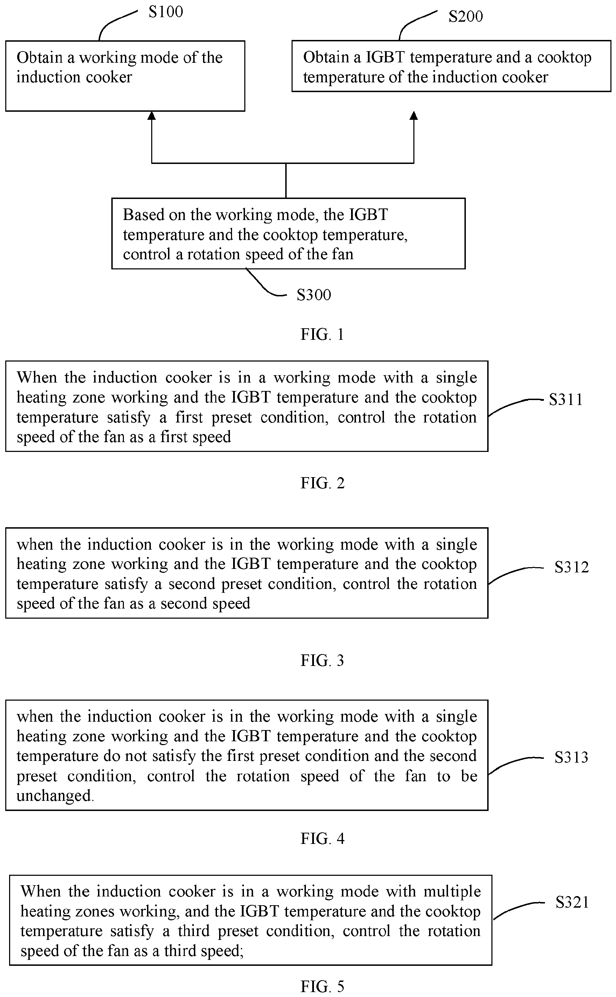

With reference to FIG. 1, the fan control method includes the following steps.

At step S 100, a working mode of an induction cooker is obtained.

At step S200, an IGBT temperature and a cooktop temperature of the induction cooker are obtained.

At step S300, based on the working mode, the IGBT temperature and the cooktop temperature, a rotation speed of the fan is controlled.

In this embodiment, the rotation speed of the fan is controlled based on the working mode, the IGBT temperature and the cooktop temperature. When multiple heating zones of the induction cooker work at the same time, since the induction cooker is heated faster to an excessively high temperature, the fan is to be controlled to rotate at a higher speed to achieve fast heat dissipation. When one heating zone of the induction cooker works, since the temperature of the induction cooker is normal, the fan may be controlled to rotate at a low speed such that noise influence can be reduced without affecting the temperature reduction. In this way, the rotation speed of the fan can be controlled with an eye on the influence of the temperature and the noise.

In the step S100, when it is detected that only one heating zone of the induction cooker works, the induction cooker is in a working mode with a single heating zone working; when it is detected that multiple heating zones of the induction cooker work, the induction cooker is in a working mode with multiple heating zones working.

In the step S200, the IGBT temperature and the cooktop temperature of the induction cooker may be obtained by using a temperature sensor. Further, the IGBT temperature and the cooktop temperature of the working heating zone are obtained.

In the step S300, with reference to FIGS. 2 to 4, when the induction cooker is in the working mode with a single heating zone working, based on the working mode, the IGBT temperature and the cooktop temperature, controlling the rotation speed of the fan includes but not limited to the following steps:
at step S311, when the induction cooker is in the working mode with a single heating zone working and the IGBT temperature and the cooktop temperature satisfy a first preset condition, controlling the rotation speed of the fan as a first speed;
at step S312, when the induction cooker is in the working mode with a single heating zone working and the IGBT temperature and the cooktop temperature satisfy a second preset condition, controlling the rotation speed of the fan as a second speed, wherein the second speed is less than the first speed;
at step S313, when the induction cooker is in the working mode with a single heating zone working and the IGBT temperature and the cooktop temperature do not satisfy the first preset condition and the second preset condition, controlling the rotation speed of the fan to be unchanged;
where the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

Specifically, the first IGBG temperature threshold is A °C , the second IGBT temperature threshold is C°C; where A°C>C°C. The first cooktop temperature threshold is B °Cand the second cooktop temperature threshold is D°C, where B°C>D°C.

When the rotation speed of the fan is the first speed, the fan rotates at high speed and the induction cooker dissipates heat faster, and the IGBT temperature and the cooktop temperature are lowered faster; when the rotation speed of the fan is the second speed, the fan rotates at low speed and the induction cooker dissipates heat slowly and the IGBT temperature and the cooktop temperature are lowered slowly or unchanged. When the fan rotates at low speed, the noise of the fan can be significantly reduced.

For example, in a specific embodiment, A°C=50°C, C°C=30°C; B°C=60°C, D°C=40 °C.

The first speed is 2500 rpm and the second speed is 1500 rpm.

It can be understood that the above values do not constitute any limitation to the specific values of the first IGBT temperature threshold, the second IGBT temperature threshold, the first cooktop temperature threshold, the second cooktop temperature threshold, the first speed and the second speed in the embodiments of the present disclosure.

When the induction cooker is in the working mode with a single heating zone working, and the IGBT temperature of the working heating zone is greater than 50°C or the cooktop temperature of the working heating zone is greater than 60°C, the induction cooker is in a high-temperature working state. At this time, the fan rotates at a speed of 2500 rpm to quickly reduce the temperature of the induction cooker, and further reduce the IGBT temperature and the cooktop temperature.

When the induction cooker is in the working mode with a single heating zone working, and the IGBT temperature of the working heating zone is less than 30 °C and the cooktop temperature of the working heating zone is less than 40°C, the induction cooker is in a normal working state. At this time, the fan rotates at a low speed of 1500 rpm.

When the induction cooker is in the working mode with a single heating zone working, and the IGBT temperature and the cooktop temperature do not satisfy the above conditions, the current speed of the fan is maintained unchanged.

In order to avoid the influence brought by the fluctuations of the IGBT temperature and the cooktop temperature, a proper temperature hysteresis error is designed.

After the heating zone of the induction cooker is turned off, the fan may continue rotating at the second speed for a period of time to increase the heat dissipation efficiency of the heating zone, lower the temperature of the heating zone, reduce the temperature of a circuit board and extending the service life of the circuit board.

Furthermore, with reference to FIGS. 5 to 7, when the induction cooker is in the working mode with multiple heating zones working, based on the working mode, the IGBT temperature and the cooktop temperature, controlling the rotation speed of the fan includes but not limited to the following steps:
at step S321, when the induction cooker is in the working mode with multiple heating zones working, and the IGBT temperature and the cooktop temperature satisfy a third preset condition, controlling the rotation speed of the fan as a third speed;
at step S322, when the induction cooker is in the working mode with multiple heating zones working, and the IGBT temperature and the cooktop temperature satisfy a fourth preset condition, controlling the rotation speed of the fan as a fourth speed, where the fourth speed is less than the third speed;
at step S323, when the induction cooker is in the working mode with multiple heating zones working, and the IGBT temperatures and the cooktop temperatures do not satisfy the third preset condition and the fourth preset condition, controlling the rotation speed of the fan to be unchanged;
where the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

Specifically, the third IGBT temperature threshold is A°C and the fourth IGBT temperature threshold is C°C, where A°C>C°C; the third cooktop temperature threshold is B°C and the fourth cooktop temperature threshold is D°C, where B°C >D°C.

When the rotation speed of the fan is the third speed, the fan rotates at high speed and the induction cooker dissipates heat faster, and the IGBT temperature and the cooktop temperature are lowered faster; when the rotation speed of the fan is the fourth speed, the fan rotates at low speed and the induction cooker dissipates heat slowly and the IGBT temperature and the cooktop temperature are lowered slowly or unchanged. When the fan rotates at low speed, the noise of the fan can be significantly reduced.

For example, in a specific embodiment, A°C=50°C, C°C=30°C; B°C=60°C, D°C=40 °C.

The third speed is 2500 rpm and the fourth speed is 1500 rpm.

It can be understood that the above values do not constitute any limitation to the specific values of the third IGBT temperature threshold, the fourth IGBT temperature threshold, the third cooktop temperature threshold, the fourth cooktop temperature threshold, the third speed and the fourth speed in the embodiments of the present disclosure.

For example, the third IGBT temperature threshold may be 55 °C or the like, and the fourth IGBT temperature threshold may be 35 °C or the like; the third cooktop temperature threshold may be 65 °C or the like, and the fourth cooktop temperature threshold may be 45°C or the like; the third speed may be 2200 rpm and the fourth speed may be 1300 rpm.

It is not necessary that the third IGBT temperature threshold, the fourth IGBT temperature threshold, the third cooktop temperature threshold, the fourth cooktop temperature threshold, the third speed, and the fourth speed are correspondingly equal to the first IGBT temperature threshold, the second IGBT temperature threshold, the first cooktop temperature threshold, the second cooktop temperature threshold, the first speed, and the second speed.

Specifically, when the induction cooker is in the working mode with multiple heating zones including a heating zone 1 and a heating zone 2 working, and the IGBT temperature of the heating zone 1 is greater than 50°C, or the IGBT temperature of the heating zone 2 is greater than 50°C, or the cooktop temperature of the heating zone 1 is greater than 60°C or the cooktop temperature of the heating zone 2 is greater than 60°C, the induction cooker is in a high-temperature working state and the fan rotates at the speed of 2500 rpm to quickly lower the temperature of the induction cooker and reduce the IGBT temperature and the cooktop temperature.
when the induction cooker is in the working mode with multiple heating zones including a heating zone 1 and a heating zone 2 working, and the IGBT temperatures of the heating zone 1 and the heating zone 2 are less than 30°C, and the cooktop temperatures of the heating zone 1 and the heating zone 2 are less than 40°C, the induction cooker is in a normal working state and the fan rotates at a low speed of 1500 rpm.

When the induction cooker is in the working mode with multiple heating zones working, and the IGBT temperatures and the cooktop temperatures do not satisfy the above conditions, the rotation speed of the fan is maintained unchanged.

In order to avoid the influence brought by the fluctuations of the IGBT temperatures and the cooktop temperatures, a proper temperature hysteresis error is designed.

After the heating zones of the induction cooker are turned off, the fan may continue rotating at the fourth speed for a period of time to increase the heat dissipation efficiency of the heating zone, lower the temperature of the heating zone, reduce the temperature of a circuit board and extending the service life of the circuit board.

By the above control solutions, the temperature reduction and noise control can be achieved for the fan, thus improving the user experiences.

When the fan rotates at a low speed, the fan simulates PWM through ordinary output port software, with a period of a clock signal being TON+TOFF and a level being 18VDC.

A display screen can display fan states which are O state, L state and H state, where the O state represents the fan is turned off, the L state represents the fan rotates at a low speed, and the H state represents the fan rotates at a high speed.

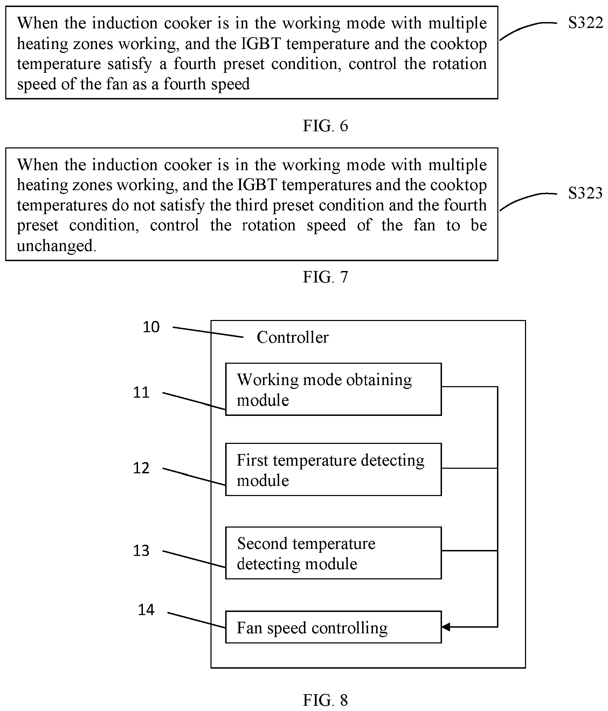

In some embodiments of the present disclosure, with reference to FIG. 8, the controller 10 includes a working mode obtaining module 11, a first temperature detecting module 12, a second temperature detecting module 13, and a fan speed controlling module 14. The working mode obtaining module 11 is configured to obtain a working mode of the induction cooker; the first temperature detecting module 12 is configured to obtain an IGBT temperature of the induction cooker; the second temperature detecting module 13 is configured to obtain a cooktop temperature of the induction cooker; the fan speed controlling module 14 is configured to control a rotation speed of the fan based on the working mode, the IGBT temperature and the cooktop temperature.

In some embodiments of the present disclosure, the fan speed controlling module 14 is further configured to:
when the induction cooker is in a working mode with a single heating zone working, and the IGBT temperature and the cooktop temperature satisfy a first preset condition, control the rotation speed of the fan as a first speed;
when the induction cooker is in the working mode with a single heating zone working and the IGBT temperature and the cooktop temperature satisfy a second preset condition, control the rotation speed of the fan as a second speed, wherein the second speed is less than the first speed;
wherein the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

In some embodiments of the present disclosure, the fan speed controlling module 14 is further configured to: when the induction cooker is in the working mode with a single heating zone working and the IGBT temperature and the cooktop temperature do not satisfy the first preset condition and the second preset condition, control the rotation speed of the fan to be unchanged.

In some embodiments of the present disclosure, the fan speed controlling module 14 is further configured to:
when the induction cooker is in a working mode with multiple heating zones working, and the IGBT temperature and the cooktop temperature satisfy a third preset condition, control the rotation speed of the fan as a third speed;
when the induction cooker is in the working mode with multiple heating zones working, and the IGBT temperature and the cooktop temperature satisfy a fourth preset condition, control the rotation speed of the fan as a fourth speed, where the fourth speed is less than the third speed;
wherein the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

In some embodiments of the present disclosure, the fan speed controlling module 14 is further configured to: when the induction cooker is in the working mode with multiple heating zones working, and the IGBT temperature and the cooktop temperature do not satisfy the third preset condition and the fourth preset condition, control the rotation speed of the fan to be unchanged.

It can be understood that the working mode obtaining module 11, the first temperature detecting module 12, the second temperature detecting module 13 and the fan speed controlling module 14 of the controller 10 are in one-to-one correspondence with the steps of the above fan control method, and can solve the same technical problems with the same technical solutions, thus bringing the same technical effects.

Although the embodiments of the present disclosure have been illustrated, persons of ordinary skills in the prior arts can understand that without departing from the principle and tenet of the present disclosure, various changes, modifications, replacements and variations can be made to these embodiments, and the scope of the present disclosure is defined by the claims and its equivalents.

The above descriptions are made to the preferred embodiments of the present disclosure but not intended to limit the present disclosure. Those skilled in the art can make equivalent variations or replacements without departing from the present disclosure and these equivalent variations or replacements are all incorporated in the scope defined by the claims of the present disclosure.

## Claims

1. A fan control method, applied to an induction cooker with multiple heating zones, where the fan control method comprises:
obtaining a working mode of the induction cooker, **characterised by**
obtaining an Insulated Gate Bipolar Transistor (IGBT) temperature and a cooktop temperature of the induction cooker;
based on the working mode, the IGBT temperature and the cooktop temperature, controlling a rotation speed of the fan.

2. The fan control method of claim 1, wherein based on the working mode, the IGBT temperature and the cooktop temperature, controlling the rotation speed of the fan comprises:
when the induction cooker is in a working mode with a single heating zone working and the IGBT temperature and the cooktop temperature satisfy a first preset condition, controlling the rotation speed of the fan as a first speed;
when the induction cooker is in the working mode with a single heating zone working and the IGBT temperature and the cooktop temperature satisfy a second preset condition, controlling the rotation speed of the fan as a second speed, wherein the second speed is less than the first speed;
wherein the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

3. The fan control method of claim 2, wherein based on the working mode, the IGBT temperature and the cooktop temperature, controlling the rotation speed of the fan comprises:
when the induction cooker is in the working mode with a single heating zone working and the IGBT temperature and the cooktop temperature do not satisfy the first preset condition and the second preset condition, controlling the rotation speed of the fan to be unchanged.

4. The fan control method of claim 1, wherein based on the working mode, the IGBT temperature and the cooktop temperature, controlling the rotation speed of the fan comprises:
when the induction cooker is in a working mode with multiple heating zones working, and the IGBT temperature and the cooktop temperature satisfy a third preset condition, controlling the rotation speed of the fan as a third speed;
when the induction cooker is in the working mode with multiple heating zones working, and the IGBT temperature and the cooktop temperature satisfy a fourth preset condition, controlling the rotation speed of the fan as a fourth speed, where the fourth speed is less than the third speed;
wherein the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

5. The fan control method of claim 4, wherein based on the working mode, the IGBT temperature and the cooktop temperature, controlling the rotation speed of the fan comprises:
when the induction cooker is in the working mode with multiple heating zones working, and the IGBT temperatures and the cooktop temperatures do not satisfy the third preset condition and the fourth preset condition, controlling the rotation speed of the fan to be unchanged.

6. An induction cooker, comprising multiple heating zones, a fan and a controller, wherein the heating zones are provided with an IGBT drive circuit; the controller is connected to the IGBT drive circuit and the fan;
the controller comprises a working mode obtaining module, a first temperature detecting module, a second temperature detecting module, and a fan speed controlling module;
the working mode obtaining module is configured to obtain a working mode of the induction cooker;
the first temperature detecting module is configured to obtain an IGBT temperature of the induction cooker;
the second temperature detecting module is configured to obtain a cooktop temperature of the induction cooker;
the fan speed controlling module is configured to control a rotation speed of the fan based on the working mode, the IGBT temperature and the cooktop temperature.

7. The induction cooker of claim 6, wherein the fan speed controlling module is further configured to:
when the induction cooker is in a working mode with a single heating zone working, and the IGBT temperature and the cooktop temperature satisfy a first preset condition, control the rotation speed of the fan as a first speed;
when the induction cooker is in the working mode with a single heating zone working and the IGBT temperature and the cooktop temperature satisfy a second preset condition, control the rotation speed of the fan as a second speed, wherein the second speed is less than the first speed;
wherein the first preset condition is that the IGBT temperature of the working heating zone is greater than a preset first IGBT temperature threshold, or the cooktop temperature of the working heating zone is greater than a preset first cooktop temperature threshold;
the second preset condition is that the IGBT temperature is less than a preset second IGBT temperature threshold, and the cooktop temperature is less than a preset second cooktop temperature threshold;
the first IGBT temperature threshold is greater than the second IGBT temperature threshold, and the first cooktop temperature threshold is greater than the second cooktop temperature threshold.

8. The induction cooker of claim 7, wherein the fan speed controlling module is further configured to: when the induction cooker is in the working mode with a single heating zone working and the IGBT temperature and the cooktop temperature do not satisfy the first preset condition and the second preset condition, control the rotation speed of the fan to be unchanged.

9. The induction cooker of claim 6, wherein the fan speed controlling module is further configured to:
when the induction cooker is in a working mode with multiple heating zones working, and the IGBT temperature and the cooktop temperature satisfy a third preset condition, control the rotation speed of the fan as a third speed;
when the induction cooker is in the working mode with multiple heating zones working, and the IGBT temperature and the cooktop temperature satisfy a fourth preset condition, control the rotation speed of the fan as a fourth speed, where the fourth speed is less than the third speed;
wherein the third preset condition is that the IGBT temperature of any of the working heating zones is greater than a preset third IGBT temperature threshold or the cooktop temperature of any of the working heating zones is greater than a preset third cooktop temperature threshold;
the fourth preset condition is that the IGBT temperatures of all working heating zones are less than a preset fourth IGBT temperature threshold, and the cooktop temperatures of all working heating zones are less than a preset fourth cooktop temperature threshold;
the third IGBT temperature threshold is greater than the fourth IGBT temperature threshold and the third cooktop temperature threshold is greater than the fourth cooktop temperature threshold.

10. The induction cooker of claim 9, wherein the fan speed controlling module is further configured to: when the induction cooker is in the working mode with multiple heating zones working, and the IGBT temperatures and the cooktop temperatures do not satisfy the third preset condition and the fourth preset condition, control the rotation speed of the fan to be unchanged.

## Patentansprüche

1. Ein Verfahren zur Steuerung eines Lüfters, das auf einen Induktionsherd mit mehreren Heizzonen angewendet wird; wobei das Verfahren umfasst:
Ermitteln eines Arbeitsmodus des Induktionsherds; **dadurch gekennzeichnet, dass** das Verfahren ferner umfasst:
Ermitteln einer Isoliert Gate Bipolar Transistor-Temperatur (IGBT-Temperatur) und einer Kochfeldtemperatur des Induktionsherds; und
Steuern einer Drehzahl des Lüfters auf Basis des Arbeitsmodus, der IGBT-Temperatur, und der Kochfeldtemperatur.

2. Verfahren nach Anspruch 1, wobei das Steuern der Drehzahl des Lüfters auf Basis des Arbeitsmodus, der IGBT-Temperatur, und der Kochfeldtemperatur umfasst:
wenn sich der Induktionsherd in einem Arbeitsmodus befindet, in dem eine einzelne Heizzone arbeitet, und die IGBT-Temperatur und die Kochfeldtemperatur eine erste voreingestellte Bedingung erfüllen, Steuern der Drehzahl des Lüfters als erste Geschwindigkeit; und
wenn sich der Induktionsherd in einem Arbeitsmodus befindet, in dem eine einzelne Heizzone arbeitet, und die IGBT-Temperatur und die Kochfeldtemperatur eine zweite voreingestellte Bedingung erfüllen, Steuern der Drehzahl des Lüfters als zweite Geschwindigkeit, wobei die zweite Geschwindigkeit geringer ist als die erste Geschwindigkeit;
wobei die erste voreingestellte Bedingung darin besteht, dass die IGBT-Temperatur der arbeitenden Heizzone größer ist als ein voreingestellter erster IGBT-Temperaturschwellenwert, oder die Kochfeldtemperatur der arbeitenden Heizzone größer ist als ein voreingestellter erster Kochfeldtemperaturschwellenwert;
die zweite voreingestellte Bedingung darin besteht, dass die IGBT-Temperatur kleiner ist als ein voreingestellter zweiter IGBT-Temperaturschwellenwert, und die Kochfeldtemperatur kleiner ist als ein voreingestellter zweiter Kochfeldtemperaturschwellenwert;
der erste IGBT-Temperaturschwellenwert größer als der zweite IGBT-Temperaturschwellenwert ist, und der erste Kochfeldtemperaturschwellenwert größer als der zweite Kochfeldtemperaturschwellenwert ist.

3. Verfahren nach Anspruch 2, wobei das Steuern der Drehzahl des Lüfters auf Basis des Arbeitsmodus, der IGBT-Temperatur, und der Kochfeldtemperatur ferner umfasst:
wenn sich der Induktionsherd in einem Arbeitsmodus befindet, in dem eine einzelne Heizzone arbeitet, und die IGBT-Temperatur und die Kochfeldtemperatur nicht die erste voreingestellte Bedingung und die zweite voreingestellte Bedingung erfüllen, Steuern der Drehzahl des Lüfters unverändert.

4. Verfahren nach Anspruch 1, wobei das Steuern der Drehzahl des Lüfters auf Basis des Arbeitsmodus, der IGBT-Temperatur, und der Kochfeldtemperatur umfasst:
wenn sich der Induktionsherd in einem Arbeitsmodus befindet, in dem mehreren Heizzonen arbeiten, und die IGBT-Temperatur und die Kochfeldtemperatur eine dritte voreingestellte Bedingung erfüllen, Steuern der Drehzahl des Lüfters als dritte Geschwindigkeit; und
wenn sich der Induktionsherd in einem Arbeitsmodus befindet, in dem mehreren Heizzonen arbeiten, und die IGBT-Temperatur und die Kochfeldtemperatur eine vierte voreingestellte Bedingung erfüllen, Steuern der Drehzahl des Lüfters als vierte Geschwindigkeit, wobei die vierte Geschwindigkeit niedriger ist als die dritte Geschwindigkeit;
wobei die dritte voreingestellte Bedingung darin besteht, dass die IGBT-Temperatur einer der arbeitenden Heizzonen größer ist als ein voreingestellter dritter IGBT-Temperaturschwellenwert, oder die Kochfeldtemperatur einer der arbeitenden Heizzonen größer ist als ein voreingestellter dritter Kochfeldtemperaturschwellenwert;
die vierte voreingestellte Bedingung ist, dass die IGBT-Temperaturen aller arbeitenden Heizzonen niedriger sind als ein voreingestellter vierten IGBT-Temperaturschwellenwert, und die Kochfeldtemperaturen aller arbeitenden Heizzonen niedriger sind als ein voreingestellter vierten Kochfeldtemperaturschwellenwert;
der dritte IGBT-Temperaturschwellenwert größer ist als der vierte IGBT-Temperaturschwellenwert, und der dritte Kochfeldtemperaturschwellenwert größer ist als der vierte Kochfeldtemperaturschwellenwert.

5. Verfahren nach Anspruch 4, wobei das Steuern der Drehzahl des Lüfters auf Basis des Arbeitsmodus, der IGBT-Temperatur, und der Kochfeldtemperatur ferner umfasst:
wenn sich der Induktionsherd in einem Arbeitsmodus befindet, in dem mehrere Heizzonen arbeiten, und die IGBT-Temperaturen und die Kochfeldtemperaturen die dritte voreingestellte Bedingung und die vierte voreingestellte Bedingung nicht erfüllen, Steuern der Drehzahl des Lüfters unverändert.

6. Ein Induktionsherd mit mehreren Heizzonen, einem Lüfter, und einer Steuerung; wobei die Heizzonen mit einer IGBT-Treiberschaltung versehen sind; die Steuerung mit der IGBT-Treiberschaltung und dem Lüfter verbunden ist;
die Steuerung ein Arbeitsmodus-Erfassungsmodul, ein erstes Temperaturerfassungsmodul, ein zweites Temperaturerfassungsmodul, und ein Lüfterdrehzahl-Steuermodul umfasst;
das Arbeitsmodus-Erfassungsmodul so konfiguriert ist, dass es einen Arbeitsmodus des Induktionsherds ermittelt;
das erste Temperaturerfassungsmodul so konfiguriert ist, dass es eine Isoliert Gate Bipolar Transistor-Temperatur (IGBT-Temperatur) des Induktionsherdes ermittelt;
das zweite Temperaturerfassungsmodul so konfiguriert ist, dass es eine Kochfeldtemperatur des Induktionsherdes ermittelt;
das Lüfterdrehzahl-Steuermodul so konfiguriert ist, dass es eine Drehzahl des Lüfters auf der Basis des Arbeitsmodus, der IGBT-Temperatur, und der Kochfeldtemperatur steuert.

7. Induktionsherd nach Anspruch 6, wobei das Lüfterdrehzahl-Steuermodul ferner so konfiguriert ist, dass es Folgendes ausführt:
wenn sich der Induktionsherd in einem Arbeitsmodus befindet, in dem eine einzelne Heizzone arbeitet, und die IGBT-Temperatur und die Kochfeldtemperatur eine erste voreingestellte Bedingung erfüllen, Steuern der Drehzahl des Lüfters als erste Geschwindigkeit; und
wenn sich der Induktionsherd in einem Arbeitsmodus befindet, in dem eine einzelne Heizzone arbeitet, und die IGBT-Temperatur und die Kochfeldtemperatur eine zweite voreingestellte Bedingung erfüllen, Steuern der Drehzahl des Lüfters als zweite Geschwindigkeit, wobei die zweite Geschwindigkeit geringer ist als die erste Geschwindigkeit;
wobei die erste voreingestellte Bedingung darin besteht, dass die IGBT-Temperatur der arbeitenden Heizzone größer ist als ein voreingestellter erster IGBT-Temperaturschwellenwert, oder die Kochfeldtemperatur der arbeitenden Heizzone größer ist als ein voreingestellter erster Kochfeldtemperaturschwellenwert;
die zweite voreingestellte Bedingung darin besteht, dass die IGBT-Temperatur kleiner ist als ein voreingestellter zweiter IGBT-Temperaturschwellenwert, und die Kochfeldtemperatur kleiner ist als ein voreingestellter zweiter Kochfeldtemperaturschwellenwert;
der erste IGBT-Temperaturschwellenwert größer als der zweite IGBT-Temperaturschwellenwert ist, und der erste Kochfeldtemperaturschwellenwert größer als der zweite Kochfeldtemperaturschwellenwert ist.

8. Induktionsherd nach Anspruch 7, wobei das Lüfterdrehzahl-Steuermodul ferner so konfiguriert ist, dass es Folgendes ausführt:
wenn sich der Induktionsherd in einem Arbeitsmodus befindet, in dem eine einzelne Heizzone arbeitet, und die IGBT-Temperatur und die Kochfeldtemperatur nicht die erste voreingestellte Bedingung und die zweite voreingestellte Bedingung erfüllen, Steuern der Drehzahl des Lüfters unverändert.

9. Induktionsherd nach Anspruch 6, wobei das Lüfterdrehzahl-Steuermodul ferner so konfiguriert ist, dass es Folgendes ausführt:
wenn sich der Induktionsherd in einem Arbeitsmodus befindet, in dem mehreren Heizzonen arbeiten, und die IGBT-Temperatur und die Kochfeldtemperatur eine dritte voreingestellte Bedingung erfüllen, Steuern der Drehzahl des Lüfters als dritte Geschwindigkeit; und
wenn sich der Induktionsherd in einem Arbeitsmodus befindet, in dem mehreren Heizzonen arbeiten, und die IGBT-Temperatur und die Kochfeldtemperatur eine vierte voreingestellte Bedingung erfüllen, Steuern der Drehzahl des Lüfters als vierte Geschwindigkeit, wobei die vierte Geschwindigkeit niedriger ist als die dritte Geschwindigkeit;
wobei die dritte voreingestellte Bedingung darin besteht, dass die IGBT-Temperatur einer der arbeitenden Heizzonen größer ist als ein voreingestellter dritter IGBT-Temperaturschwellenwert, oder die Kochfeldtemperatur einer der arbeitenden Heizzonen größer ist als ein voreingestellter dritter Kochfeldtemperaturschwellenwert;
die vierte voreingestellte Bedingung ist, dass die IGBT-Temperaturen aller arbeitenden Heizzonen niedriger sind als ein voreingestellter vierten IGBT-Temperaturschwellenwert, und die Kochfeldtemperaturen aller arbeitenden Heizzonen niedriger sind als ein voreingestellter vierten Kochfeldtemperaturschwellenwert;
der dritte IGBT-Temperaturschwellenwert größer ist als der vierte IGBT-Temperaturschwellenwert, und der dritte Kochfeldtemperaturschwellenwert größer ist als der vierte Kochfeldtemperaturschwellenwert.

10. Induktionsherd nach Anspruch 9, wobei das Lüfterdrehzahl-Steuermodul ferner so konfiguriert ist, dass es Folgendes ausführt:
wenn sich der Induktionsherd in einem Arbeitsmodus befindet, in dem mehrere Heizzonen arbeiten, und die IGBT-Temperaturen und die Kochfeldtemperaturen die dritte voreingestellte Bedingung und die vierte voreingestellte Bedingung nicht erfüllen, Steuern der Drehzahl des Lüfters unverändert.

## Revendications

1. Procédé de contrôle de ventilateur, applicable à une cuisinière à induction comportant plusieurs zones de chauffage, dans lequel le Procédé de contrôle de ventilateur comprend :
obtenir un mode de fonctionnement de la cuisinière à induction, **caractérisé par** obtenir une température de Transistor Bipolaire à Grille Isolée (IGBT) et une température d'une table de cuisson de la cuisinière à induction ;
contrôler, sur la base du mode de fonctionnement, de la température IGBT et de la température de la table de cuisson, une vitesse de rotation du ventilateur.

2. Procédé de contrôle de ventilateur selon la revendication 1, dans lequel l'étape de contrôler, sur la base du mode de fonctionnement, de la température IGBT et de la température de la table de cuisson, la vitesse de rotation du ventilateur comprend :
lorsque la cuisinière à induction est en mode de fonctionnement à une seule zone de chauffage en fonctionnement et que la température IGBT et la température de la table de cuisson satisfont à une première condition prédéfinie, contrôler la vitesse de rotation du ventilateur comme première vitesse ;
lorsque la cuisinière à induction est en mode de fonctionnement à une seule zone de chauffage en fonctionnement et que la température IGBT et la température de la table de cuisson satisfont à une deuxième condition prédéfinie, contrôler la vitesse de rotation du ventilateur comme deuxième vitesse, dans laquelle la deuxième vitesse est inférieure à la première vitesse ;
dans laquelle la première condition prédéfinie est que la température IGBT de la zone de chauffage en fonctionnement soit supérieure à un premier seuil de température IGBT prédéfini, ou que la température de la table de cuisson de la zone de chauffage en fonctionnement soit supérieure à un premier seuil de température de la table de cuisson prédéfini ;
la deuxième condition prédéfinie est que la température IGBT soit inférieure à un deuxième seuil de température IGBT prédéfini et que la température de la table de cuisson soit inférieure à un deuxième seuil de température de la table de cuisson prédéfini ;
le premier seuil de température IGBT est supérieur au deuxième seuil de température IGBT, et le premier seuil de température de la table de cuisson est supérieur au deuxième seuil de température de la table de cuisson.

3. Procédé de contrôle de ventilateur selon la revendication 2, dans lequel l'étape de contrôler, sur la base du mode de fonctionnement, de la température IGBT et de la température de la table de cuisson, la vitesse de rotation du ventilateur comprend :
lorsque la cuisinière à induction est en mode de fonctionnement à une seule zone de chauffage en fonctionnement et que la température IGBT et la température de la table de cuisson ne satisfont pas à la première condition prédéfinie ni la deuxième condition prédéfinie, contrôler la vitesse de rotation du ventilateur à être inchangée.

4. Procédé de contrôle de ventilateur selon la revendication 1, dans lequel l'étape de contrôler, sur la base du mode de fonctionnement, de la température IGBT et de la température de la table de cuisson, la vitesse de rotation du ventilateur comprend :
lorsque la cuisinière à induction est en mode de fonctionnement à plusieurs zones de chauffage en fonctionnement et que la température IGBT et la température de la table de cuisson satisfont à une troisième condition prédéfinie, contrôler la vitesse de rotation du ventilateur comme troisième vitesse ;
lorsque la cuisinière à induction est en mode de fonctionnement à plusieurs zones de chauffage en fonctionnement et que la température IGBT et la température de la table de cuisson satisfont à une quatrième condition prédéfinie, contrôler la vitesse de rotation du ventilateur comme quatrième vitesse, dans laquelle la quatrième vitesse est inférieure à la troisième vitesse ;
dans laquelle la troisième condition prédéfinie est que la température IGBT d'une quelconque des zones de chauffage en fonctionnement soit supérieure à un troisième seuil de température IGBT prédéfini, ou que la température de la table de cuisson d'une quelconque des zones de chauffage en fonctionnement soit supérieure à un troisième seuil de température de la table de cuisson prédéfini ;
la quatrième condition prédéfinie est que les températures IGBT de toutes les zones de chauffage en fonctionnement soient inférieures à un quatrième seuil de température IGBT prédéfini, et que les températures de la table de cuisson de toutes les zones de chauffage en fonctionnement soient inférieures à un quatrième seuil de température de table de cuisson prédéfini ;
le troisième seuil de température IGBT est supérieur au quatrième seuil de température IGBT, et le troisième seuil de température de la table de cuisson est supérieur au quatrième seuil de température de la table de cuisson.

5. Procédé de contrôle de ventilateur selon la revendication 4, dans lequel l'étape de contrôler, sur la base du mode de fonctionnement, de la température IGBT et de la température de la table de cuisson, la vitesse de rotation du ventilateur comprend :
lorsque la cuisinière à induction est en mode de fonctionnement à plusieurs zones de chauffage en fonctionnement et que les températures IGBT et les températures de la table de cuisson ne satisfont pas à la troisième condition prédéfinie ni la quatrième condition prédéfinie, contrôler la vitesse de rotation du ventilateur à être inchangée.

6. Cuisinière à induction, comprenant plusieurs zones de chauffage, un ventilateur et un contrôleur, dans laquelle les zones de chauffage sont pourvues d'un circuit d'entraînement IGBT ; le contrôleur est connecté au circuit d'entraînement IGBT et au ventilateur ;
le contrôleur comprend un module d'obtention de mode de fonctionnement, un premier module de détection de température, un deuxième module de détection de température et un module de contrôle de vitesse du ventilateur ;
le module d'obtention de mode de fonctionnement est configuré pour obtenir un mode de fonctionnement de la cuisinière à induction ;
le premier module de détection de température est configuré pour obtenir une température IGBT de la cuisinière à induction ;
le deuxième module de détection de température est configuré pour obtenir une température de la table de cuisson de la cuisinière à induction ;
le module de contrôle de vitesse du ventilateur est configuré pour contrôler une vitesse de rotation du ventilateur sur la base du mode de fonctionnement, de la température IGBT et de la température de la table de cuisson.

7. Cuisinière à induction selon la revendication 6, dans laquelle le module de contrôle de vitesse du ventilateur est configuré en outre pour :
lorsque la cuisinière à induction est en mode de fonctionnement à une seule zone de chauffage en fonctionnement et que la température IGBT et la température de la table de cuisson satisfont à une première condition prédéfinie, contrôler la vitesse de rotation du ventilateur comme première vitesse ;
lorsque la cuisinière à induction est en mode de fonctionnement à une seule zone de chauffage en fonctionnement et que la température IGBT et la température de la table de cuisson satisfont à une deuxième condition prédéfinie, contrôler la vitesse de rotation du ventilateur comme deuxième vitesse, dans laquelle la deuxième vitesse est inférieure à la première vitesse ;
dans laquelle la première condition prédéfinie est que la température IGBT de la zone de chauffage en fonctionnement soit supérieure à un premier seuil de température IGBT prédéfini, ou que la température de la table de cuisson de la zone de chauffage en fonctionnement soit supérieure à un premier seuil de température de la table de cuisson prédéfini ;
la deuxième condition prédéfinie est que la température IGBT soit inférieure à un deuxième seuil de température IGBT prédéfini et que la température de la table de cuisson soit inférieure à un deuxième seuil de température de la table de cuisson prédéfini ;
le premier seuil de température IGBT est supérieur au deuxième seuil de température IGBT, et le premier seuil de température de la table de cuisson est supérieur au deuxième seuil de température de la table de cuisson.

8. Cuisinière à induction selon la revendication 7, dans laquelle le module de contrôle de vitesse du ventilateur est configuré en outre pour : lorsque la cuisinière à induction est en mode de fonctionnement à une seule zone de chauffage en fonctionnement et que la température IGBT et la température de la table de cuisson ne satisfont pas à la première condition prédéfinie ni la deuxième condition prédéfinie, contrôler la vitesse de rotation du ventilateur à être inchangée.

9. Cuisinière à induction selon la revendication 6, dans laquelle le module de contrôle de vitesse du ventilateur est configuré en outre pour :
lorsque la cuisinière à induction est en mode de fonctionnement à plusieurs zones de chauffage en fonctionnement et que la température IGBT et la température de la table de cuisson satisfont à une troisième condition prédéfinie, contrôler la vitesse de rotation du ventilateur comme troisième vitesse ;
lorsque la cuisinière à induction est en mode de fonctionnement à plusieurs zones de chauffage en fonctionnement et que la température IGBT et la température de la table de cuisson satisfont à une quatrième condition prédéfinie, contrôler la vitesse de rotation du ventilateur comme quatrième vitesse, dans laquelle la quatrième vitesse est inférieure à la troisième vitesse ;
dans laquelle la troisième condition prédéfinie est que la température IGBT d'une quelconque des zones de chauffage en fonctionnement soit supérieure à un troisième seuil de température IGBT prédéfini, ou que la température de la table de cuisson d'une quelconque des zones de chauffage en fonctionnement soit supérieure à un troisième seuil de température de la table de cuisson prédéfini ;
la quatrième condition prédéfinie est que les températures IGBT de toutes les zones de chauffage en fonctionnement soient inférieures à un quatrième seuil de température IGBT prédéfini, et que les températures de la table de cuisson de toutes les zones de chauffage en fonctionnement soient inférieures à un quatrième seuil de température de table de cuisson prédéfini ;
le troisième seuil de température IGBT est supérieur au quatrième seuil de température IGBT, et le troisième seuil de température de la table de cuisson est supérieur au quatrième seuil de température de la table de cuisson.

10. Cuisinière à induction selon la revendication 9, dans laquelle dans laquelle le module de contrôle de vitesse du ventilateur est configuré en outre pour : lorsque la cuisinière à induction est en mode de fonctionnement à plusieurs zones de chauffage en fonctionnement et que les températures IGBT et les températures de la table de cuisson ne satisfont pas à la troisième condition prédéfinie ni la quatrième condition prédéfinie, contrôler la vitesse de rotation du ventilateur à être inchangée.
